(19) Europäisches Patentamt / European Patent Office / Office européen des brevets

(11) **EP 4 752 981 A1**

(12) **EUROPEAN PATENT APPLICATION**
published in accordance with Art. 153(4) EPC

(43) Date of publication:
03.06.2026 Bulletin 2026/23

(21) Application number: 24845168.4

(22) Date of filing: 22.05.2024

(51) International Patent Classification (IPC):
$H01M\ 4/62^{(2006.01)}$   $C08G\ 18/65^{(2006.01)}$
$C08G\ 18/69^{(2006.01)}$   $H01M\ 4/13^{(2010.01)}$
$H01M\ 4/139^{(2010.01)}$   $H01M\ 4/38^{(2006.01)}$
$H01M\ 4/48^{(2010.01)}$   $H01M\ 4/58^{(2010.01)}$

(52) Cooperative Patent Classification (CPC):
C08G 18/65; C08G 18/69; H01M 4/13; H01M 4/134;
H01M 4/139; H01M 4/38; H01M 4/48; H01M 4/58;
H01M 4/62; Y02E 60/10

(86) International application number:
PCT/JP2024/018843

(87) International publication number:
WO 2025/022784 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023 JP 2023120555

(71) Applicant: DKS Co. Ltd.
Kyoto-shi, Kyoto 600-8873 (JP)

(72) Inventors:
• NISHIKAWA, Akiyoshi
  Kyoto-shi, Kyoto 600-8873 (JP)
• SAKAMOTO, Koichi
  Kyoto-shi, Kyoto 600-8873 (JP)
• KANEKO, Fumiya
  Kyoto-shi, Kyoto 600-8873 (JP)
• MATSUMOTO, Masaaki
  Kyoto-shi, Kyoto 600-8873 (JP)

(74) Representative: Hoffmann Eitle
Patent- und Rechtsanwälte PartmbB
Arabellastraße 30
81925 München (DE)

(54) **LITHIUM SECONDARY BATTERY ELECTRODE BINDER, ELECTRODE BINDER COMPOSITION, NEGATIVE ELECTRODE, AND LITHIUM SECONDARY BATTERY**

(57) Provided is lithium secondary battery electrode binder capable of suppressing an increase in internal resistance due to charging and discharging. A lithium secondary battery electrode binder according to an embodiment of the present invention includes: (A) a polyisocyanate component including at least one selected from the group consisting of diphenylmethane diisocyanate and modified bodies thereof; (B) a polyol component including a hydrogenated polybutadiene polyol; (C) an active hydrogen group-containing carboxylic acid; and (D) an aqueous dispersion of a salt of a polyurethane obtained by reacting water as a chain extender. The salt of the polyurethane does not substantially contain a structure derived from an amine-based chain extender.

EP 4 752 981 A1

**Description**

TECHNICAL FIELD

Embodiments of the present invention relate to an electrode binder, an electrode binder composition, and a negative electrode of a lithium secondary battery, and a lithium secondary battery.

BACKGROUND ART

A lithium secondary battery is also referred to as a lithium ion secondary battery, and is used as a high-voltage, high-energy density power storage device, for example, as a power source for driving electronic devices. An electrode of the lithium secondary battery is usually produced by applying a mixture of an electrode active material, a conductive agent, and a binder onto a surface of a current collector and drying the mixture. The binder is used to impart an adhesive force between the electrode active material and the current collector. Therefore, the binder has a large influence on characteristics of the lithium secondary battery.

As an electrode binder of the lithium secondary battery, Patent Literature 1 discloses a binder containing an aqueous dispersion of a polyurethane sodium salt obtained by reacting at least one of an aliphatic polyisocyanate and an alicyclic polyisocyanate, a hydrogenated polybutadiene polyol, a carboxylic acid having one or more active hydrogen groups, and a chain extender. According to Patent Literature 1, expansion of an electrode due to charge and discharge is reduced, and charge and discharge cycle characteristics are improved.

CITATION LIST

PATENT LITERATURE

Patent Literature 1: JP7161078B

SUMMARY OF INVENTION

TECHNICAL PROBLEM

For example, in the case where a silicon-based active material such as SiO is used as a negative electrode active material, internal resistance increases due to the charge and discharge, leading to a decrease in charge and discharge cycle characteristics. Therefore, an electrode binder capable of preventing an increase in internal resistance due to the charge and discharge is required.

Patent Literature 1 discloses that the hydrogenated polybutadiene polyol and the active hydrogen group-containing carboxylic acid are used as components constituting the aqueous dispersion of the polyurethane, but an aliphatic or alicyclic polyisocyanate is used as the polyisocyanate, and the chain is extended with an amine-based chain extender. Therefore, Patent Literature 1 does not describe an aqueous dispersion of polyurethane obtained by chain extension with water using diphenylmethane diisocyanate and/or a modified product thereof together with the hydrogenated polybutadiene polyol.

An object of embodiments of the present invention is to provide an electrode binder of a lithium secondary battery capable of preventing an increase in internal resistance due to charge and discharge.

SOLUTION TO PROBLEM

The present invention includes the following embodiments.

[1] An electrode binder of a lithium secondary battery, including:

an aqueous dispersion of a polyurethane salt obtained by reacting (A) a polyisocyanate component containing at least one selected from the group consisting of diphenylmethane diisocyanate and a modified product thereof, (B) a polyol component containing a hydrogenated polybutadiene polyol, (C) an active hydrogen group-containing carboxylic acid, and (D) water as a chain extender, in which
the polyurethane salt does not have a structure derived from an amine-based chain extender, or even if the polyurethane salt has a structure derived from an amine-based chain extender, a content thereof is less than 0.01 mol/kg.

[2] The electrode binder of a lithium secondary battery according to [1], in which the active hydrogen group-containing carboxylic acid includes an aliphatic carboxylic acid having two hydroxy groups.

[3] The electrode binder of a lithium secondary battery according to [1] or [2], in which the polyol component further contains a trifunctional or higher functional polyol having a molecular weight of 500 or less.

[4] The electrode binder of a lithium secondary battery according to any one of [1] to [3], in which the polyurethane has an acid value of 8 mgKOH/g to 35 mgKOH/g.

[5] The electrode binder of a lithium secondary battery according to any one of [1] to [4], in which the polyurethane salt is an alkali metal salt.

[6] The electrode binder of a lithium secondary battery according to any one of [1] to [5], which is for use in a negative electrode of a lithium secondary battery containing, as a negative electrode active material, at least one selected from the group consisting of SiO, SiC, Si, and a material obtained by pre-doping these with a lithium ion.

[7] An electrode binder composition of a lithium secondary battery, including:

a polyurethane salt obtained by reacting (A) a polyisocyanate component containing at least one selected from the group consisting of diphenylmethane diisocyanate and a modified product thereof, (B) a polyol component containing a hydrogenated polybutadiene polyol, (C) an active hydrogen group-containing carboxylic acid, and (D) water as a chain extender, in which the polyurethane salt does not have a structure derived from an amine-based chain extender, or even if the polyurethane salt has a structure derived from an amine-based chain extender, a content thereof is less than 0.01 mol/kg;
a conductive agent; and
water.

[8] A negative electrode of a lithium secondary battery, including:

a solid content of the electrode binder according to any one of [1] to [6] or the electrode binder composition according to [7]; and
a negative electrode active material containing at least one selected from the group consisting of SiO, SiC, Si, and a material obtained by pre-doping these with a lithium ion.

[9] A lithium secondary battery including: the negative electrode according to [8].

ADVANTAGEOUS EFFECTS OF INVENTION

According to the embodiments of the present invention, an increase in internal resistance due to charge and discharge of a lithium secondary battery can be prevented.

DESCRIPTION OF EMBODIMENTS

An electrode binder of a lithium secondary battery according to the present embodiment contains: an aqueous dispersion of a polyurethane salt (hereinafter may be simply referred to as a "polyurethane") obtained by reacting (A) a polyisocyanate component containing at least one selected from the group consisting of diphenylmethane diisocyanate and a modified product thereof, (B) a polyol component containing a hydrogenated polybutadiene polyol, (C) an active hydrogen group-containing carboxylic acid, and (D) water as a chain extender. In this way, by using diphenylmethane diisocyanate and/or a modified product thereof as the polyisocyanate to be reacted with the hydrogenated polybutadiene polyol and performing chain extension with water, it is possible to prevent an increase in internal resistance of the lithium secondary battery due to charge and discharge and to improve charge and discharge cycle characteristics, as shown in Examples to be described later.

[Polyisocyanate Component (A)]

In the present embodiment, as the polyisocyanate component (A), among aromatic polyisocyanates, at least one selected from the group consisting of (A1) diphenylmethane diisocyanate and a modified product thereof (hereinafter may be referred to as an "MDI-based isocyanate") is used.

Examples of the diphenylmethane diisocyanate (MDI) include 2,2'-diphenylmethane diisocyanate (2,2'-MDI), 2,4'-diphenylmethane diisocyanate (2,4'-MDI), 4,4'-diphenylmethane diisocyanate (4,4'-MDI, monomeric MDI), and polymeric MDI (polymethylene polyphenyl polyisocyanate). These may be used alone or in combination of two or more kinds thereof. As is well known, polymeric MDI is a mixture containing monomeric MDI and a polynuclear thereof, and is included in the diphenylmethane diisocyanate (MDI).

The modified product of diphenylmethane diisocyanate is not particularly limited as long as it has a diphenylmethane skeleton (Ph-CH$_2$-Ph), and examples thereof include a dimer of MDI, carbodiimide-modified MDI, uretonimine-modified MDI, and (trimer) isocyanurate-modified MDI. These may be used alone or in combination of two or more kinds thereof.

The polyisocyanate component (A) is basically composed of the MDI-based isocyanate (A1), but may contain other polyisocyanates as long as the effect thereof is not impaired. More specifically, an amount of the MDI-based isocyanate (A1) in 100 mass% of the polyisocyanate component (A) is not particularly limited, and is preferably 80 mass% or more, more preferably 90 mass% or more, still more preferably 95 mass% or more, and particularly preferably 100 mass%.

Examples of the other polyisocyanates include aromatic polyisocyanates other than the MDI-based isocyanate (for example, tolylene diisocyanate (TDI), xylylene diisocyanate (XDI), and a modified product thereof), aliphatic polyisocyanates (for example, hexamethylene diisocyanate (HDI), tetramethylene diisocyanate, lysine diisocyanate, and a modified product thereof), and alicyclic polyisocyanates (for example, isophorone diisocyanate (IPDI), dicyclohexylmethane 4,4'-diisocyanate (hydrogenated MDI), and a modified product thereof).

The amount of the MDI-based isocyanate (A1) in the polyurethane is not particularly limited, and may be, for example, 10 mass% to 45 mass%, 15 mass% to 40 mass%, or 20 mass% to 35 mass% as a content of a structure derived from the MDI-based isocyanate with respect to 100 mass% of the polyurethane salt.

[Polyol Component (B)]

In the present embodiment, as the polyol component (B), a hydrogenated polybutadiene polyol (B1) is used. Here, even in the case where the active hydrogen group-containing carboxylic acid as the component (C) has a plurality of hydroxy groups in one molecule, the active hydrogen group-containing carboxylic acid is not considered to be included in the polyol component (B).

As the hydrogenated polybutadiene polyol (B1), one having an average of 1.3 or more hydroxy groups per molecule is preferably used, one having an average of 1.5 to 2.5 hydroxy groups per molecule is more preferably used, and one having an average of 1.7 to 2.2 hydroxy groups per molecule is still more preferably used. In the present description, the number of hydroxy groups (the number of functional groups) per molecule is a value calculated according to the following equation.

$$\text{Number of functional groups} = \{(\text{hydroxyl value}) \times (\text{Mn})\}/(56.1 \times 1000)$$

As the hydrogenated polybutadiene polyol (B1), one having a 1,4-bond type, a 1,2-bond type, or a polybutadiene structure in which these are mixed in a molecule, and having a structure obtained by hydrogenating a polybutadiene polyol having a hydroxy group at an end is preferably used. More preferably, the hydrogenated polybutadiene polyol (B1) has a structure obtained by hydrogenating a polybutadiene polyol having hydroxy groups at both ends of the polybutadiene structure.

The hydrogenated polybutadiene polyol (B1) is obtained by hydrogenating a part or all of the unsaturated double bonds contained in the polybutadiene polyol. A degree of hydrogenation of the hydrogenated polybutadiene polyol (B1) is not particularly limited, and for example, an iodine value may be 40 g/100 g or less, 30 g/100 g or less, 25 g/100 g or less, or 15 g/100 g or less. In the present description, the iodine value is measured according to JIS K0070: 1992.

The molecular weight of the hydrogenated polybutadiene polyol (B1) is not particularly limited, and for example, a number average molecular weight (Mn) may be 600 to 10,000, 800 to 6,000, 1,000 to 5,000, 1,200 to 4,000, or 1,500 to 3,500.

In the present description, the number average molecular weight (Mn) is a value measured by a GPC method (gel permeation chromatography method) and calculated using a calibration curve of standard polystyrene. Specifically, the measurement can be performed under the following GPC conditions: column: "TSKgel G4000HXL + TSKgel G3000HXL + TSKgel G2000HXL + TSKgel G1000HXL + TSKgel G1000HXL" manufactured by Tosoh Corporation, mobile phase: THF (tetrahydrofuran), mobile phase flow rate: 1.0 mL/min, column temperature: 40°C, sample injection amount: 50 μL, and sample concentration: 0.2 mass%.

A hydroxyl value of the hydrogenated polybutadiene polyol (B1) is not particularly limited, and may be, for example, 10 mgKOH/g to 200 mgKOH/g, 15 mgKOH/g to 120 mgKOH/g, 20 mgKOH/g to 100 mgKOH/g, 30 mgKOH/g to 90 mgKOH/g, or 40 mgKOH/g to 80 mgKOH/g. In the present description, the hydroxyl value is measured according to Method A in JIS K1557-1:2007.

The polyol component (B) may be composed of only the hydrogenated polybutadiene polyol (B1), or may contain a non-hydrogenated polybutadiene polyol (B2) together with the hydrogenated polybutadiene polyol (B1).

The number of functional groups, the number average molecular weight, and the hydroxyl value of the polybutadiene polyol (B2) are not particularly limited, and those having the same numerical ranges as those of the hydrogenated polybutadiene polyol (B1) may be used.

The polyol component (B) may be composed of only the hydrogenated polybutadiene polyol (B1) or only the hydrogenated polybutadiene polyol (B1) and the polybutadiene polyol (B2). Preferably, the polyol component (B) contains a trifunctional or higher functional polyol (B3) having a molecular weight of 500 or less (hereinafter may be referred to as a "polyfunctional polyol") together with the hydrogenated polybutadiene polyol (B1) and the polybutadiene polyol (B2) as an optional component. By containing the polyfunctional polyol (B3), it is easy to follow expansion and contraction of an electrode during charge and discharge, and it is easy to reduce deformation of the electrode after the charge and discharge. Therefore, charge and discharge cycle characteristics can be further improved.

Examples of the polyfunctional polyol (B3) include trihydric alcohols such as trimethylolpropane, glycerin, trimethylolethane, butanetriol, pentanetriol, and hexanetriol, tetrahydric alcohols such as pentaerythritol, and those obtained by ring-opening addition of a lactone and/or epoxide using these polyhydric alcohols as an initiator. These may be used alone or in combination of two or more kinds thereof. Trihydric alcohols and/or ethylene oxide adducts thereof are preferred.

The molecular weight of the polyfunctional polyol (B3) is preferably 92 to 350, and more preferably 100 to 200. The molecular weight of the polyfunctional polyol (B3) is a number average molecular weight (Mn) in the case of an adduct obtained by adding a plurality of moles of the lactone and/or epoxide.

An amount of the hydrogenated polybutadiene polyol (B1) in 100 mass% of the polyol component (B) is not particularly limited, and is preferably 40 mass% to 100 mass%, more preferably 70 mass% to 100 mass%, still more preferably 80 mass% to 99.5 mass%, even more preferably 90 mass% to 99 mass%, and even still more preferably 95 mass% to 98 mass%. A total amount of the hydrogenated polybutadiene polyol (B1) and the polybutadiene polyol (B2) is also not particularly limited, and is preferably 80 mass% to 100 mass%, more preferably 85 mass% to 99.5 mass%, still more preferably 90 mass% to 99 mass%, and even more preferably 95 mass% to 98 mass% in 100 mass% of the polyol component (B).

An amount of the polyfunctional polyol (B3) in 100 mass% of the polyol component (B) is not particularly limited, and is preferably 0 mass% to 15 mass%, more preferably 0.5 mass% to 10 mass%, still more preferably 1 mass% to 7 mass%, and even more preferably 2 mass% to 5 mass%.

The amount of the hydrogenated polybutadiene polyol (B1) in the polyurethane is not particularly limited, and may be, for example, 30 mass% to 85 mass%, 40 mass% to 80 mass%, 50 mass% to 78 mass%, or 55 mass% to 75 mass% as a content of a structure derived from the hydrogenated polybutadiene polyol with respect to 100 mass% of the polyurethane salt. The total amount of the hydrogenated polybutadiene polyol (B1) and the polybutadiene polyol (B2) in the polyurethane is also not particularly limited, and may be 40 mass% to 85 mass%, 50 mass% to 80 mass%, or 55 mass% to 75 mass% as a total amount of the structure derived from the hydrogenated polybutadiene polyol and a structure derived from the polybutadiene polyol with respect to 100 mass% of the polyurethane salt.

The amount of the polyfunctional polyol (B3) in the polyurethane is not particularly limited, and may be, for example, 0 mass% to 7 mass%, 0.5 mass% to 5 mass%, or 1 mass% to 3 mass% as a content of a structure derived from the polyfunctional polyol with respect to 100 mass% of the polyurethane salt.

[Active Hydrogen Group-containing Carboxylic Acid (C)]

In the present embodiment, as a compound having an active hydrogen group that reacts with the component (A), the active hydrogen group-containing carboxylic acid (C) is used together with the component (B). The active hydrogen group-containing carboxylic acid (C) is a compound having one or more active hydrogen groups and a carboxy group. The number of the active hydrogen groups in the carboxylic acid may be 1 to 3, and more preferably 1 or 2. The active hydrogen group is a group containing active hydrogen that reacts with an isocyanate group, and examples thereof include a hydroxy group, a primary amino group ($-NH_2$), and a secondary amino group (-NHR).

Here, the carboxy group is a concept including not only an acid type (-COOH) but also a salt type, that is, a carboxylate group (-COOX, X: a cation forming a salt with a carboxylic acid), and an acid type and a salt type may be mixed. However, in the polyurethane contained in the electrode binder or an electrode binder composition, the carboxy group derived from the carboxylic acid is present as a salt type. Accordingly, it is possible to make the polyurethane water dispersible.

Examples of the active hydrogen group-containing carboxylic acid (C) include hydroxy acids such as dimethylolpropionic acid, dimethylolbutanoic acid, dimethylolvaleric acid, dihydroxymaleic acid, and dihydroxybenzoic acid, derivatives thereof, and salts thereof. Examples of the active hydrogen group-containing carboxylic acid also include amino acids such as alanine, aminobutyric acid, aminocaproic acid, glycine, glutamic acid, aspartic acid, histidine, and diaminobenzoic acid. These may be used alone or in combination of two or more kinds thereof.

The active hydrogen group-containing carboxylic acid (C) is preferably an aliphatic carboxylic acid having two hydroxy groups (C1). Examples of the aliphatic carboxylic acid having two hydroxy groups include dimethylolpropionic acid, dimethylolbutanoic acid, and dimethylolvaleric acid, and those having 5 to 10 carbon atoms are preferably used. These may be used alone or in combination of two or more kinds thereof.

The active hydrogen group-containing carboxylic acid (C) is preferably composed of only the component (C1), but may contain an active hydrogen group-containing carboxylic acid other than the component (C1). An amount of the component (C1) in 100 mass% of the active hydrogen group-containing carboxylic acid (C) is not particularly limited, and is preferably 70 mass% or more, more preferably 80 mass% or more, and still more preferably 90 mass% or more.

An amount of the active hydrogen group-containing carboxylic acid (C) in the polyurethane is not particularly limited, and may be, for example, 1 mass% to 15 mass%, 2 mass% to 10 mass%, or 3 mass% to 8 mass% as a content of a structure derived from the active hydrogen group-containing carboxylic acid with respect to 100 mass% of the polyurethane salt.

[Chain Extender (D)]

In the present embodiment, water is used as the chain extender of the component (D). In general, an amine-based chain extender such as diethylenetriamine is used as the chain extender, but when the amine-based chain extender is used together with the MDI-based isocyanate (A1) and the hydrogenated polybutadiene polyol (B1), the internal resistance increases due to charge and discharge of the lithium secondary battery, and the charge and discharge cycle characteristics are impaired. Therefore, in the present embodiment, it is preferable that the amine-based chain extender is not substantially used, that is, the polyurethane salt does not substantially have a structure derived from the amine-based chain extender.

Here, the amine-based chain extender refers to a compound having a plurality of primary and/or secondary amino groups generally used as a chain extender for the polyurethane, and examples thereof include diamines such as ethylenediamine, trimethylenediamine, piperazine, and isophoronediamine, and polyamines such as diethylenetriamine, dipropylenetriamine, and triethylenetetramine.

The phrase of "does not substantially have a structure derived from the amine-based chain extender" means that the polyurethane salt does not have a structure derived from the amine-based chain extender, or, even if any, the content of the structure derived from the amine-based chain extender with respect to 1 kg of the polyurethane salt is less than 0.01 mol, that is, less than 0.01 mol/kg. Therefore, the amount of the amine-based chain extender used in preparing the polyurethane salt is less than 0.01 mol per 1 kg of the polyurethane salt to be produced. The content of the structure derived from the amine-based chain extender is more preferably less than 0.005 mol/kg, and still more preferably 0 mol/kg (that is, no amine-based chain extender is used).

[Electrode Binder]

The electrode binder according to the present embodiment contains an aqueous dispersion of a polyurethane salt obtained by reacting the components (A) to (D). That is, in the polyurethane obtained by reacting the components (A) to (D), the carboxy group derived from the component (C) is dispersed in water as a salt. Therefore, the electrode binder contains water and a polyurethane salt dispersed in water.

More specifically, the polyurethane aqueous dispersion contains a polyurethane salt obtained by subjecting, to chain extension with water, an isocyanate group-containing urethane prepolymer obtained by reacting the components (A) to (C).

Examples of the polyurethane salts include alkali metal salts such as a lithium salt, a sodium salt, and a potassium salt, ammonium salts, and amine salts such as a primary amine, a secondary amine, and a tertiary amine. Among these, from the viewpoint of adhesiveness of the electrode to a current collector and prevention of deformation of the electrode after charge and discharge, the polyurethane salt is preferably an alkali metal salt, and more preferably a sodium salt.

The carboxy group in the polyurethane can be formed into a salt by neutralization. In this case, neutralization can be performed before, during, or after a urethanization reaction. Examples of a neutralizing agent for the neutralization include alkali metal hydroxides such as sodium hydroxide, lithium hydroxide, and potassium hydroxide, tertiary amines such as trimethylamine, triethylamine, dimethylethanolamine, methyldiethanolamine, and triethanolamine, and ammonia.

An acid value used as an indicator of a content of the carboxy group in the polyurethane is preferably 8 mgKOH/g to 35 mgKOH/g. When the acid value of the polyurethane is 8 mgKOH/g or more, dispersibility in water can be improved, and when the acid value is 35 mgKOH/g or less, electrolytic liquid resistance can be improved. The acid value of the polyurethane is more preferably 10 mgKOH/g to 30 mgKOH/g or less, and still more preferably 15 mgKOH/g to 25 mgKOH/g or less.

In the present description, the acid value can be determined based on an amount (mg) of KOH required to neutralize free carboxy groups contained in 1 g of the solid content of the polyurethane aqueous dispersion in accordance with JIS K0070-1992 (neutralization titration method).

In the present embodiment, an average particle diameter of the polyurethane aqueous dispersion is not particularly limited, and may be, for example, in a range of 0.005 $\mu$m to 0.5 $\mu$m or 0.1 $\mu$m to 0.3 $\mu$m. In addition, the number average molecular weight (Mn) of the polyurethane is not particularly limited, and may be, for example, 10,000 or more, or 50,000 or more.

A method for producing the polyurethane aqueous dispersion is not particularly limited, and for example, the following method may be used. The component (A) is reacted with the component (B) and the component (C) without a solvent or in an organic solvent having no active hydrogen group to synthesize the isocyanate group-containing urethane prepolymer. At this time, the component (A) is used such that the isocyanate group is stoichiometrically excessive as compared with a total amount of the active hydrogen groups contained in the component (B) and the component (C), for example, an equivalent ratio NCO/OH of the isocyanate group to the active hydrogen group is 1.05 to 1.80 (more preferably 1.10 to 1.60). After the synthesis of the urethane prepolymer, the carboxy group in the component (C) is neutralized with a neutralizing agent, and water serving as a dispersion medium and a chain extender is added to emulsify and disperse the urethane prepolymer in water. Thereafter, a chain extension reaction with water is completed by stirring the emulsified dispersion, and then the organic solvent used as necessary is removed to obtain an aqueous dispersion of the polyurethane salt.

In the synthesis of the urethane prepolymer, an organic solvent inert to the isocyanate group and capable of dissolving the produced urethane prepolymer may be used. Examples of such an organic solvent include dioxane, methyl ethyl ketone, acetone, dimethylformamide, tetrahydrofuran, N-methyl-2-pyrrolidone, toluene, and propylene glycol monomethyl ether acetate. In the electrode binder according to the present embodiment, the dispersion medium in which the polyurethane salt is dispersed may or may not contain these organic solvents in addition to water. These organic solvents are preferably removed finally. In the case where the organic solvent is contained, the amount of water is preferably 70 mass% or more, and more preferably 90 mass% or more with respect to 100 mass% of the dispersion medium.

In the electrode binder according to the present embodiment, a concentration of the polyurethane salt is not particularly limited, and may be, for example, 5 mass% to 50 mass% or 10 mass% to 40 mass%.

[Electrode Binder Composition]

An electrode binder composition of a lithium secondary battery according to the present embodiment contains a polyurethane salt obtained by reacting the components (A) to (D), a conductive agent, and water. Specifically, the electrode binder composition contains the polyurethane salt and the conductive agent in a state of being dispersed in water. The electrode binder composition may be prepared, for example, by mixing an aqueous dispersion of the polyurethane and an aqueous dispersion of the conductive agent.

As the conductive agent, an electron conductive material that does not adversely influence battery performance can be used. Specific examples of the conductive agent include conductive materials such as fibrous nanocarbon, carbon black such as acetylene black and Ketjen black, natural graphite (scaly graphite, flaky graphite, earthy graphite, etc.), artificial graphite, carbon whisker, a carbon fiber, a metal (copper, nickel, aluminum, silver, gold, etc.) powder, a metal fiber, and a conductive ceramic material. These may be used alone or in combination of two or more kinds thereof.

The conductive agent is preferably used in a state of being dispersed in a dispersion medium. As the dispersion medium, water is usually used, and a polar organic solvent such as an alcohol or ketone-based solvent, or a mixed solvent of the polar organic solvent and water may be used. Examples of a dispersing device for dispersing the conductive agent in the dispersion medium include a jet mill, a high-pressure dispersing device, and an ultrasonic homogenizer.

When preparing the aqueous dispersion in which the conductive agent is dispersed in water, a dispersant may be added. Examples of the dispersant include celluloses such as hydroxymethyl cellulose, carboxymethyl cellulose and an alkali metal salt thereof, methyl cellulose, ethyl cellulose, hydroxypropyl methyl cellulose, and hydroxyethyl methyl cellulose, cellulose nanofibers, polycarboxylic acid-based compounds such as polyacrylic acid and sodium polyacrylate, compounds having a vinylpyrrolidone structure such as polyvinylpyrrolidone, polyvinyl alcohol, sodium alginate, xanthan gum, carrageenan, guar gum, agar, and starch. Among these, a carboxymethyl cellulose salt is suitably used.

In the electrode binder composition, a concentration of the polyurethane salt is not particularly limited, and may be, for example, 5 mass% to 50 mass% or 10 mass% to 40 mass%. A concentration of the conductive agent is also not particularly limited, and may be, for example, 5 mass% to 35 mass% or 15 mass% to 30 mass%. In the case where the electrode binder composition contains an organic solvent as the dispersion medium, the amount of water is preferably 70 mass% or more, and more preferably 90 mass% or more with respect to 100 mass% of the dispersion medium.

[Electrode Coating Liquid Composition]

The electrode binder and the electrode binder composition according to the present embodiment are used to prepare an electrode coating liquid composition for producing an electrode of a lithium secondary battery. In the case of using the electrode binder, an electrode coating liquid composition (1) contains the electrode binder, an electrode active material, and a conductive agent. In the case of using the electrode binder composition, an electrode coating liquid composition (2) contains the electrode binder composition and an electrode active material.

These electrode coating liquid compositions are preferably used for producing a negative electrode of a lithium secondary battery. Therefore, the electrode active material is preferably a negative electrode active material. As the negative electrode active material, a material capable of inserting/extracting metal lithium or lithium ions can be used.

Specific examples of the negative electrode active material include carbon materials such as natural graphite, artificial graphite, hardly-graphitizable carbon, and easily-graphitizable carbon, metal materials such as metal lithium, an alloy, and a tin compound, lithium transition metal nitrides, crystalline metal oxides, amorphous metal oxides, silicon compounds, and conductive polymers. These may be used alone or in combination of two or more kinds thereof.

Among these, the negative electrode active material preferably contains at least one silicon-based active material selected from the group consisting of SiO (silicon monoxide), SiC (silicon carbide), Si, and a material obtained by pre-doping these with a lithium ion (for example, Li-SiO) since a high capacity can be achieved. The negative electrode active material may be a mixture of a silicon-based active material and graphite, or only the silicon-based active material may be used as the negative electrode active material.

In the electrode coating liquid composition, a content of the polyurethane salt is not particularly limited, and is preferably 1 mass% to 20 mass%, and more preferably 2 mass% to 13 mass% with respect to a content of the electrode active material (negative electrode active material).

In the electrode coating liquid composition (1), specific examples of the conductive agent are as described above in the electrode binder composition, and the description thereof is omitted.

In the electrode coating liquid composition, a content of the conductive agent is not particularly limited, and is preferably 0.1 mass% to 20 mass%, and more preferably 0.2 mass% to 10 mass% with respect to the content of the electrode active material (negative electrode active material).

The electrode coating liquid composition may contain a thickener such as a watersoluble polymer as a viscosity modifier for forming the composition into a slurry. Examples of the thickener include celluloses such as a carboxymethyl cellulose salt, methyl cellulose, ethyl cellulose, hydroxymethyl cellulose, hydroxypropyl methyl cellulose, and hydroxyethyl methyl cellulose, polycarboxylic acid-based compounds such as polyacrylic acid and sodium polyacrylate, compounds having a vinylpyrrolidone structure such as polyvinylpyrrolidone, polyacrylamide, polyethylene oxide, polyvinyl alcohol, sodium alginate, xanthan gum, carrageenan, guar gum, agar, and starch. These may be used alone or in combination of two or more kinds thereof. Among these, a carboxymethyl cellulose salt is preferred.

A content of the electrode active material (negative electrode active material) in the solid content of the electrode coating liquid composition is not particularly limited, and may be, for example, 65 mass% to 99 mass% or 75 mass% to 97 mass%. A content of the dispersion medium such as water in the electrode coating liquid composition is not particularly limited, and may be, for example, 20 mass% to 80 mass% or 40 mass% to 70 mass%.

The method for preparing the electrode coating liquid composition is not particularly limited. When mixing the above components, for example, a mortar, a mill mixer, a ball mill such as a planetary ball mill or a shaker ball mill, or mechanofusion can be used.

[Negative Electrode of Lithium Secondary Battery]

A negative electrode of a lithium secondary battery according to the embodiment can be produced by applying the electrode coating liquid composition to a current collector and evaporating the dispersion medium. That is, the negative electrode includes a current collector and a negative electrode mixture layer (also referred to as an active material layer) formed on the current collector, and the negative electrode mixture layer is formed of a solid of the electrode coating liquid composition.

In one embodiment, the electrode coating liquid composition contains, together with the electrode binder or the electrode binder composition, at least one silicon-based active material selected from the group consisting of SiO, SiC, Si, and a material obtained by pre-doping these with a lithium ion as the negative electrode active material. Therefore, a negative electrode of a lithium secondary battery according to one embodiment contains a solid content of the electrode binder or the electrode binder composition and a negative electrode active material containing the silicon-based active material.

As the current collector, an electron conductor that does not adversely influence the formed battery can be used. Examples of the current collector for the negative electrode include copper, stainless steel, nickel, aluminum, titanium, calcined carbon, a conductive polymer, a conductive glass, and an Al-Cd alloy, as well as those obtained by treating the surface of copper or the like with carbon, nickel, titanium, silver, or the like for the purpose of improving adhesiveness, conductivity, and oxidation resistance. The surfaces of these current collector materials may be oxidized. Examples of the shape of the current collector include a foil shape, a film shape, a sheet shape, a net shape, a punched or expanded product, a lath body, a porous body, and a molded body such as a foam. The thickness of the current collector is not particularly limited, and a current collector having a thickness of 1 μm to 100 μm is usually used.

The thickness of the negative electrode mixture layer is not particularly limited, and may be, for example, 15 μm to 150 μm.

[Lithium Secondary Battery]

A lithium secondary battery according to an embodiment includes the negative electrode. More specifically, the lithium secondary battery includes a negative electrode, a positive electrode, a separator disposed between the negative electrode and the positive electrode, and an electrolyte, and an electrode prepared using the electrode coating liquid composition is used as the negative electrode.

The positive electrode, the separator, and the electrolyte are not particularly limited, and known configurations can be adopted.

The lithium secondary battery according to the embodiment can be formed in a cylindrical shape, a coin shape, a square shape, or any other shape, and the basic configuration of the battery is the same regardless of the shape, and can be implemented by changing the design according to the purpose. For example, in the case of a cylindrical shape, a wound body in which a negative electrode obtained by applying a negative electrode active material to a negative electrode current collector and a positive electrode obtained by applying a positive electrode active material to a positive electrode current collector are wound with a separator interposed therebetween is housed in a battery can, a non-aqueous electrolytic solution is injected thereto, and the battery can is sealed in a state where insulating plates are placed on upper and lower sides. In the case of a coin-shaped lithium secondary battery, a disk-shaped negative electrode, a separator, a disk-shaped positive electrode, and a stainless steel plate are housed in a coin-shaped battery can in a stacked state, and a non-aqueous electrolytic solution is injected thereto, and the battery can is sealed.

Examples

Hereinafter, the present invention is described in more detail based on Examples and Comparative Examples, but the present invention is not limited thereto.

Details of the polyisocyanate component and the hydrogenated polybutadiene polyol used in Examples are as follows.

[Polyisocyanate Component]

· Monomeric MDI: "Millionate MT-F" manufactured by Tosoh Corporation
· Modified MDI: carbodiimide-modified MDI, "Millionate MTL" manufactured by Tosoh Corporation
· Polymeric MDI: "Millionate MR-200" manufactured by Tosoh Corporation
· TDI: "TAKENATE 500" manufactured by Mitsui Chemicals, Inc.
· HDI: "DURANATE 50M-HDI" manufactured by Asahi Kasei Corporation

[Hydrogenated Polybutadiene Polyol]

· Hydrogenated polybutadiene polyol 1: "Krasol HLBH-P2000" (Mn: 2,100, hydroxyl value: 50.8 mgKOH/g, number of functional groups: 1.9), manufactured by CRAY VALLEY
· Hydrogenated polybutadiene polyol 2: "Krasol HLBH-P3000" (Mn: 3,100, hydroxyl value: 34.4 mgKOH/g, number of functional groups: 1.9), manufactured by CRAY VALLEY

[Polybutadiene Polyol]

· Polybutadiene polyol: "Krasol LBH-P2000" (Mn: 2,000, hydroxyl value: 53.3 mgKOH/g, number of functional groups: 1.9), manufactured by CRAY VALLEY

[Synthesis of Polyurethane Aqueous Dispersion]

(Example 1: Binder 1)

To a four-necked flask equipped with a stirrer, a reflux condenser, a thermometer, and a nitrogen inlet tube, 65.66 parts by mass of the hydrogenated polybutadiene polyol 1, 4.2 parts by mass of dimethylolpropionic acid, 1.8 parts by mass of trimethylolpropane, 28.34 parts by mass of monomeric MDI, and 150 parts by mass of methyl ethyl ketone were added, followed by reacting at 75°C for 4 hours, to obtain a solution of a urethane prepolymer in methyl ethyl ketone having a free isocyanate group content of 2.53 mass% with respect to the solid content (NCO/OH = 1.36). This solution was cooled to 45°C, and a sodium hydroxide aqueous solution containing 1.25 parts by mass of sodium hydroxide as a neutralizing agent and 270 parts by mass of water was gradually added thereto, followed by emulsification and dispersion using a homogenizer. Subsequently, the emulsified dispersion was stirred at 40°C for 1 hour to complete the chain extension reaction with water. Methyl ethyl ketone was distilled off under heating and a reduced pressure to obtain an aqueous dispersion of a polyurethane sodium salt (binder 1) having a solid content of 32 mass%.

(Examples 2 to 4 and 6 to 9: Binders 2 to 4 and 6 to 9)

Each aqueous dispersion of a polyurethane sodium salt (binders 2 to 4 and 6 to 9) in Examples 2 to 4 and 6 to 9 was obtained in the same manner as in Example 1 except that the type and the charged amount of the polyisocyanate component (A), the polyol component (B), and the active hydrogen group-containing carboxylic acid (C), and the amount of sodium hydroxide were changed as shown in Table 1 below. The amount of free isocyanate groups at the end of the urethane reaction when obtaining the isocyanate group-containing urethane prepolymer was 2.27 mass% in Example 2, 2.48 mass% in Example 3, 1.99 mass% in Example 4, 2.53 mass% in Example 6, 2.03 mass% in Example 7, 2.31 mass% in Example 8, and 3.04 mass% in Example 9. In addition, the amount of water added as a dispersion medium was adjusted such that the solid content concentration in the aqueous dispersion was 32 mass%.

(Example 5: Binder 5)

Unlike in the synthesis method in Example 1, a solution of a urethane prepolymer in methyl ethyl ketone was obtained, cooled to 45°C, and then neutralized by adding 3.17 parts by mass of triethylamine as a neutralizing agent, followed by emulsification and dispersion by adding 270 parts by mass of water as a dispersion medium while stirring using a homogenizer. An aqueous dispersion of a triethylamine salt of polyurethane (binder 5) having a solid content of 32 mass% was obtained in the same manner as in Example 1 except for the above.

(Example 10: Binder 10)

To a four-necked flask equipped with a stirrer, a reflux condenser, a thermometer, and a nitrogen inlet tube, 32.83 parts by mass of the hydrogenated polybutadiene polyol 1, 32.83 parts by mass of a polybutadiene polyol, 4.2 parts by mass of dimethylolpropionic acid, 1.8 parts by mass of trimethylolpropane, 28.34 parts by mass of monomeric MDI, and 150 parts by mass of methyl ethyl ketone were added, followed by reacting at 75°C for 4 hours, to obtain a solution of a urethane prepolymer in methyl ethyl ketone having a free isocyanate group content of 2.53 mass% with respect to the solid content (NCO/OH = 1.35). This solution was cooled to 45°C, and a sodium hydroxide aqueous solution containing 1.25 parts by mass of sodium hydroxide as a neutralizing agent and 270 parts by mass of water was gradually added thereto, followed by emulsification and dispersion using a homogenizer. Subsequently, the emulsified dispersion was stirred at 40°C for 1 hour to complete the chain extension reaction with water. Methyl ethyl ketone was distilled off under heating and a reduced pressure to obtain an aqueous dispersion of a polyurethane sodium salt (binder 10) having a solid content of 32 mass%.

(Comparative Example 1)

To a four-necked flask equipped with a stirrer, a reflux condenser, a thermometer, and a nitrogen inlet tube, 78.47 parts by mass of the hydrogenated polybutadiene polyol 1, 1.8 parts by mass of trimethylolpropane, 19.73 parts by mass of monomeric MDI, and 150 parts by mass of methyl ethyl ketone were added, followed by reacting at 75°C for 4 hours, to obtain a solution of a urethane prepolymer in methyl ethyl ketone having a free isocyanate group content of 1.76 mass% with respect to the solid content (NCO/OH = 1.37). The prepolymer solution was cooled to 45°C, then 270 parts by mass of water as a dispersion medium was added thereto under stirring using a homogenizer to perform emulsification and dispersion, but the emulsification could not be performed. Therefore, in Comparative Example 1, the following evaluation on the polyurethane aqueous dispersion and the preparation and evaluation of the battery were not performed.

(Comparative Examples 2 and 3: Binders C2 and C3)

Each aqueous dispersion of a polyurethane sodium salt (binders C2 and C3) in Comparative Examples 2 and 3 was obtained in the same manner as in Example 1 except that the type and the charged amount of the polyisocyanate component (A), the polyol component (B), and the active hydrogen group-containing carboxylic acid (C) were changed as shown in Table 1 below. The amount of free isocyanate groups at the end of the urethane reaction when obtaining the isocyanate group-containing urethane prepolymer was 2.64 mass% in Comparative Example 2 and 2.66 mass% in Comparative Example 3. In addition, the amount of water added as a dispersion medium was adjusted such that the solid content concentration in the aqueous dispersion was 32 mass%.

(Comparative Example 4: Binder C4)

Unlike in the synthesis method in Example 1, a solution of a urethane prepolymer in methyl ethyl ketone was obtained, cooled to 45°C, and then a sodium hydroxide aqueous solution containing 1.25 parts by mass of sodium hydroxide as a neutralizing agent and 270 parts by mass of water was gradually added thereto, followed by emulsification and dispersion using a homogenizer. Subsequently, an aqueous solution obtained by diluting 0.41 parts by mass of diethylenetriamine with 5 parts by mass of water was added, and a chain extension reaction was performed for 1 hour. An aqueous dispersion of a polyurethane sodium salt (binder C4) having a solid content of 32 mass% was obtained in the same manner as in Example 1 except for the above. In the polyurethane sodium salt, the content of the structure derived from the amine-based chain extender is 0.04 mol/kg.

(Comparative Example 5: Binder C5)

An aqueous dispersion of a polyurethane sodium salt (binder C5) having a solid content of 32 mass% was obtained in the same manner as in Comparative Example 4 except that 0.44 parts by mass of triethylenetetramine was used as a chain extender instead of 0.41 parts by mass of diethylenetriamine, unlike in the synthesis method in Comparative Example 4. In the polyurethane sodium salt, the content of the structure derived from the amine-based chain extender is 0.03 mol/kg.

[Evaluation of Polyurethane Aqueous Dispersion]

For the obtained binders 1 to 10 and binders C2 to C5, the acid value of the polyurethane and the average particle diameter of the polyurethane aqueous dispersion were measured. The results are shown in Table 1 below. The measurement method is as follows. In Table 1, the "amount of polyurethane salt" is parts by mass of the polyurethane salt produced through the chain extension reaction when the total amount of the components (A) to (C) "(A)+(B)+(C)" is 100 parts by mass. In addition, "prepolymer: NCO/OH" is an equivalent ratio of the isocyanate group to the hydroxy group in the urethane prepolymer.

· Acid value of polyurethane: measured in accordance with JIS K0070-1992 (neutralization titration method).
· Average particle diameter of polyurethane aqueous dispersion: measured using "Microtrac UPA-UZ152" manufactured by Nikkiso Co., Ltd., and calculated as a particle diameter of 50% accumulation, that is, d50 (median diameter).

[Preparation of Lithium Secondary Battery]

(Preparation of Negative Electrode)

88.5 parts by mass of SiO (average particle diameter: 4.5 $\mu$m, specific surface area: 5.5 $m^2$/g) as a negative electrode active material, 40 parts by mass of a fibrous nanocarbon aqueous dispersion (solid content concentration: 0.4 mass%) and 4.0 parts by mass of an acetylene black aqueous dispersion (solid content concentration: 25 mass%) as a conductive agent, 50.0 parts by mass of a 2.0 mass% aqueous solution of carboxymethyl cellulose sodium salt as a thickener, 28 parts by mass of an aqueous dispersion of a polyurethane sodium salt of the binder 1, and 6 parts by mass of ion-exchanged water were mixed using a planetary mixer to prepare a negative electrode slurry having a solid content of 46 mass%. An electrolytic copper foil having a thickness of 10 $\mu$m was used as a current collector, and a negative electrode mixture layer made of the negative electrode slurry was formed on the electrolytic copper foil. Specifically, the negative electrode slurry was applied onto the electrolytic copper foil using a coater, subjected to a roll press treatment, and then dried under a reduced pressure at 130°C to obtain a negative electrode having a negative electrode active material of 2.7 mg/$cm^2$. As the binder, the binders 1 to 10 and the binders C2 to C6 described above were individually used.

(Preparation of Positive Electrode)

92 parts by mass of $LiNiCoAlO_2$ (NCA) as a positive electrode active material, 4 parts by mass of acetylene black ("Li-400" manufactured by Denka Company Limited) as a conductive agent, 4 parts by mass of polyvinylidene fluoride as a binder, and 49.2 parts by mass of N-methyl-2-pyrrolidone as a dispersion medium were mixed using a planetary mixer to prepare a positive electrode slurry having a solid content of 67 mass%. The positive electrode slurry was applied onto an aluminum foil having a thickness of 15 $\mu$m using a coater, dried at 130°C, and then subjected to a roll press treatment to obtain a positive electrode having a positive electrode active material of 16.6 mg/cm$^2$.

(Preparation of Battery)

The positive electrode and the negative electrode obtained above were combined and laminated with a polyolefin-based (PE/PP/PE) separator interposed between the electrodes as a separator, and a positive electrode terminal and a negative electrode terminal were ultrasonically welded to each of the positive and negative electrodes. The laminate was placed in an aluminum laminate packaging material and heat-sealed except for an opening for injection. A pre-injection battery having a positive electrode area of 18 cm$^2$ and a negative electrode area of 19.8 cm$^2$ was prepared. Next, an electrolytic solution obtained by dissolving $LiPF_6$ (1.0 mol/L) in a solvent obtained by mixing ethylene carbonate and diethyl carbonate (30/70 in vol ratio) was injected, and the opening was heat-sealed to obtain an evaluation battery.

[Evaluation of Negative Electrode and Battery Performance]

The adhesive force (peel strength) of the prepared negative electrode was evaluated. In addition, the charge and discharge cycle characteristics, the internal resistance after the charge and discharge, and an electrode expansion coefficient of the evaluation battery were evaluated. The evaluation test methods are as follows.

(Adhesive Force)

The negative electrode was cut into a piece of 3 cm × 6 cm, and the coated surface was folded back by 180° cm so as to be 3 cm × 3 cm inward, and then a degree of falling-off of the active material from the coated surface (the length of the falling-off portion with respect to the folded portion) was visually determined. The evaluation criteria are as follows.

> A: 0% (no falling-off)
> B: falling-off is 5% or less (electrolytic copper foil is slightly visible)
> C: falling-off is more than 5% and less than 30%
> D: falling-off is 30% or more

(Charge and Discharge Cycle Characteristics)

The evaluation battery was subjected to a charge and discharge cycle test in a charge and discharge apparatus under the following conditions. A cycle of CC (constant current) charging to 4.2 V at a current density equivalent to 1 C, subsequently switching to CV (constant voltage) charging at 4.2 V, charging until the time was 1.5 hours or the current density reached 0.1 C, and then CC discharging to 2.7 V at a current density equivalent to 1 C was performed 200 times at 20°C, and a ratio of a 1 C discharge capacity after 200 times to an initial 1 C discharge capacity was determined as a charge and discharge cycle retention rate (%). The pause between charge and discharge was 10 minutes. The evaluation criteria are as follows.

> A: the charge and discharge cycle retention rate is 95% or more
> B: the charge and discharge cycle retention rate is 90% or more and less than 95%
> C: the charge and discharge cycle retention rate is 80% or more and less than 90%
> D: the charge and discharge cycle retention rate is less than 80%

(Internal Resistance after Charge and Discharge)

A cell impedance (mΩ) of the battery after the evaluation of the charge and discharge cycle characteristics was measured at a frequency of 1 kHz using an AC Milliohm Hitester ("3560" manufactured by HIOKI E.E. CORPORATION). The evaluation criteria are as follows.

> A: the cell impedance is less than 110 mΩ

B: the cell impedance is 110 mΩ or more and less than 115 mΩ
C: the cell impedance is 115 mΩ or more and less than 120 mΩ
D: the cell impedance is 120 mΩ or more

(Electrode Expansion Coefficient after Charge and Discharge)

The thickness of the negative electrode in assembling the evaluation battery, the thickness of the battery before the evaluation of the charge and discharge cycle characteristics (cell thickness before evaluation), and the thickness of the battery after the evaluation of the charge and discharge cycle characteristics (cell thickness after evaluation) were measured using a micrometer and calculated according to the following calculation equations.

Electrode expansion coefficient = (cell thickness after evaluation - cell thickness before evaluation)/negative electrode mixture layer thickness × 100% Negative electrode mixture layer thickness = negative electrode thickness - copper foil thickness

The evaluation criteria are as follows.

A: the electrode expansion coefficient is less than 30%
B: the electrode expansion coefficient is 30% or more and less than 35%
C: the electrode expansion coefficient is 35% or more and less than 45%
D: the electrode expansion coefficient is 45% or more

Table 1

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Blending (part by mass) | | | | | | | | | | | |
| (B) | Hydrogenated polybutadiene polyol 1 | 65.66 | - | 61.9 | 71.72 | 65.66 | 65.66 | 73.12 | 69.32 | 57.12 | 32.83 |
| | Hydrogenated polybutadiene polyol 2 | - | 68.6 | - | - | - | - | - | - | - | - |
| | Polybutadiene polyol | - | - | - | - | - | - | - | - | - | 32.83 |
| | Trimethylolpropane | 1.8 | 1.8 | 1.8 | - | 1.8 | 1.8 | - | 1.8 | 1.8 | 1.8 |
| (C) | Dimethylolpropionic acid | 4.2 | 4.2 | 4.2 | 4.2 | 4.2 | - | 4.2 | 3.0 | 7.0 | 4.2 |
| | Dimethylolbutanoic acid | - | - | - | - | - | 4.64 | - | - | - | - |
| (A) | Monomeric MDI | 28.34 | 25.4 | - | - | 28.34 | 28.28 | 22.68 | 25.88 | 34.08 | 28.34 |
| | Modified MDI | - | - | 32.1 | - | - | - | - | - | - | - |
| | Polymeric MDI | - | - | - | 24.08 | - | - | - | - | - | - |
| | TDI | - | - | - | - | - | - | - | - | - | - |
| | HDI | - | - | - | - | - | - | - | - | - | - |
| | (A)+(B)+(C) | 100 | 100 | 100 | 100 | 100 | 100 | 100 | 100 | 100 | 100 |
| Neutralizing agent | Sodium hydroxide | 1.25 | 1.25 | 1.25 | 1.25 | - | 1.25 | 1.25 | 0.89 | 2.09 | 1.25 |
| | Triethylamine | - | - | - | - | 3.17 | - | - | - | - | - |
| Chain extender | Diethylenetriamine | - | - | - | - | - | - | - | - | - | - |
| | Triethylenetetramine | - | - | - | - | - | - | - | - | - | - |
| Amount (part by mass) of polyurethane salt | | 98.04 | 98.31 | 98.09 | 98.61 | 100.52 | 98.04 | 98.56 | 98.07 | 97.97 | 98.10 |
| Prepolymer: NCO/OH | | 1.36 | 1.36 | 1.36 | 1.36 | 1.36 | 1.36 | 1.36 | 1.36 | 1.36 | 1.35 |
| Acid value (mgKOH/g) of polyurethane | | 17.4 | 17.4 | 17.4 | 17.4 | 17.0 | 17.3 | 17.4 | 12.4 | 28.7 | 17.4 |
| Average particle diameter ($\mu$m) of aqueous dispersion | | 0.15 | 0.21 | 0.16 | 0.17 | 0.12 | 0.12 | 0.15 | 0.20 | 0.13 | 0.21 |
| Evaluation | Adhesive force | A | A | A | A | C | C | B | B | B | A |
| | Charge and discharge cycle characteristics | A | A | A | A | A | A | C | B | B | A |
| | Internal resistance after charge and discharge | A | A | B | B | A | A | B | B | B | B |
| | Electrode expansion coefficient after charge and discharge | A | B | A | A | C | C | C | B | B | A |

Table 1 (continued)

|  |  | Comp. Ex. 1 | Comp. Ex. 2 | Comp. Ex. 3 | Comp. Ex. 4 | Comp. Ex. 5 |
|---|---|---|---|---|---|---|
| Blending (part by mass) |  |  |  |  |  |  |
| (B) | Hydrogenated polybutadiene polyol 1 | 78.47 | 73.40 | 74.03 | 65.66 | 65.66 |
|  | Hydrogenated polybutadiene polyol 2 | - | - | - | - | - |
|  | Polybutadiene polyol | - | - | - | - | - |
|  | Trimethylolpropane | 1.8 | 1.8 | 1.8 | 1.8 | 1.8 |
| (C) | Dimethylolpropionic acid | - | 4.2 | 4.2 | 4.2 | 4.2 |
|  | Dimethylolbutanoic acid | - | - | - | - | - |
| (A) | Monomeric MDI | 19.73 | - | - | 28.34 | 28.34 |
|  | Modified MDI | - | - | - | - | - |
|  | Polymeric MDI | - | - | - | - | - |
|  | TDI | - | 20.6 | - | - | - |
|  | HDI | - | - | 19.97 | - | - |
| (A)+(B)+(C) |  | 100 | 100 | 100 | 100 | 100 |
| Neutralizing agent Chain extender | Sodium hydroxide | - | 1.25 | 1.25 | 1.25 | 1.25 |
|  | Triethylamine | - | - | - | - | - |
|  | Diethylenetriamine | - | - | - | 0.41 | - |
|  | Triethylenetetramine | - | - | - | - | 0.44 |
| Amount (part by mass) of polyurethane salt |  | 98.16 | 97.92 | 97.90 | 101.10 | 101.13 |
| Prepolymer: NCO/OH |  | 1.37 | 1.36 | 1.37 | 1.36 | 1.36 |
| Acid value (mgKOH/g) of polyurethane |  | - | 17.4 | 17.4 | 17.5 | 17.5 |
| Average particle diameter ($\mu$m) of aqueous dispersion |  | - | 0.25 | 0.20 | 0.15 | 0.15 |
| Evaluation |  |  |  |  |  |  |
| Adhesive force |  | - | D | D | D | D |
| Charge and discharge cycle characteristics |  | - | D | D | D | D |
| Internal resistance after charge and discharge |  | - | D | D | D | D |
| Electrode expansion coefficient after charge and discharge |  | - | D | D | D | D |

The results are shown in Table 1. In Examples 1 to 10 in which an MDI-based isocyanate is used as the polyisocyanate component combined with a polyol containing hydrogenated polybutadiene polyol, and the chain is extended with water, the increase in internal resistance after the charge and discharge can be prevented, and good charge and discharge cycle characteristics are obtained.

In addition, the adhesive force between the current collector and the electrode active material is good, and the deformation of the electrode after the charge and discharge is also prevented.

In contrast, in Comparative Examples 2 and 3 in which an aromatic polyisocyanate other than the MDI-based isocyanate or an aliphatic polyisocyanate is used as the polyisocyanate component, the increase in internal resistance after the charge and discharge is large, and the charge and discharge cycle characteristics are poor. In addition, the adhesive force between the current collector and the electrode active material is poor, and the deformation of the electrode after the charge and discharge is large.

In Comparative Examples 4 and 5 in which the hydrogenated polybutadiene polyol and the MDI-based isocyanate are combined, but the chain is extended with the amine-based chain extender, the increase in internal characteristics after the charge and discharge cannot be prevented probably because the expansion of the electrode due to the use of the silicon-based active material cannot be followed, and the charge and discharge cycle characteristics are poor.

In the various numerical ranges described in the description, the upper limit values and the lower limit values thereof can be feely combined, and all the combinations are described in the present description as preferred numerical ranges. In addition, the description of the numerical range of "X to Y" means X or more and Y or less.

Although several embodiments of the present invention have been described above, these embodiments are presented as examples and are not intended to limit the scope of the invention. These embodiments can be implemented in various other forms, and various omissions, substitutions, and modifications can be made without departing from the spirit of the invention. These embodiments and the omissions, substitutions, and modifications are included in the scope of the invention and its equivalents as described in the claims, as well as in the scope and gist of the invention.

**Claims**

1. An electrode binder of a lithium secondary battery, comprising:

   an aqueous dispersion of a polyurethane salt obtained by reacting (A) a polyisocyanate component containing at least one selected from the group consisting of diphenylmethane diisocyanate and a modified product thereof, (B) a polyol component containing a hydrogenated polybutadiene polyol, (C) an active hydrogen group-containing carboxylic acid, and (D) water as a chain extender, wherein
   the polyurethane salt does not have a structure derived from an amine-based chain extender, or even if the polyurethane salt has a structure derived from an amine-based chain extender, a content thereof is less than 0.01 mol/kg.

2. The electrode binder of a lithium secondary battery according to claim 1, wherein the active hydrogen group-containing carboxylic acid includes an aliphatic carboxylic acid having two hydroxy groups.

3. The electrode binder of a lithium secondary battery according to claim 1, wherein the polyol component further contains a trifunctional or higher functional polyol having a molecular weight of 500 or less.

4. The electrode binder of a lithium secondary battery according to claim 1, wherein the polyurethane has an acid value of 8 mgKOH/g to 35 mgKOH/g.

5. The electrode binder of a lithium secondary battery according to claim 1, wherein the polyurethane salt is an alkali metal salt.

6. The electrode binder of a lithium secondary battery according to claim 1, which is for use in a negative electrode of a lithium secondary battery containing, as a negative electrode active material, at least one selected from the group consisting of SiO, SiC, Si, and a material obtained by pre-doping these with a lithium ion.

7. An electrode binder composition of a lithium secondary battery, comprising:

   a polyurethane salt obtained by reacting (A) a polyisocyanate component containing at least one selected from the group consisting of diphenylmethane diisocyanate and a modified product thereof, (B) a polyol component containing a hydrogenated polybutadiene polyol, (C) an active hydrogen group-containing carboxylic acid, and (D) water as a chain extender, in which the polyurethane salt does not have a structure derived from an amine-based chain extender, or even if the polyurethane salt has a structure derived from an amine-based chain extender, a content thereof is less than 0.01 mol/kg;
   a conductive agent; and
   water.

8. A negative electrode of a lithium secondary battery, comprising:

   a solid content of the electrode binder according to claim 1 or the electrode binder composition according to claim 7; and
   a negative electrode active material containing at least one selected from the group consisting of SiO, SiC, Si, and a material obtained by pre-doping these with a lithium ion.

9. A lithium secondary battery comprising:
the negative electrode according to claim 8.

## INTERNATIONAL SEARCH REPORT

| International application No. |
|---|
| **PCT/JP2024/018843** |

| A. | CLASSIFICATION OF SUBJECT MATTER |
|---|---|

*H01M 4/62*(2006.01)i; *C08G 18/65*(2006.01)i; *C08G 18/69*(2006.01)i; *H01M 4/13*(2010.01)i; *H01M 4/139*(2010.01)i;
*H01M 4/38*(2006.01)i; *H01M 4/48*(2010.01)i; *H01M 4/58*(2010.01)i
FI:   H01M4/62 Z; H01M4/139; H01M4/13; H01M4/38 Z; H01M4/48; H01M4/58; C08G18/65 041; C08G18/69

According to International Patent Classification (IPC) or to both national classification and IPC

| B. | FIELDS SEARCHED |
|---|---|

Minimum documentation searched (classification system followed by classification symbols)

H01M4/62; C08G18/65; C08G18/69; H01M4/13; H01M4/139; H01M4/38; H01M4/48; H01M4/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-204244 A (TOYO INK SC HOLDINGS CO., LTD.) 22 October 2012 (2012-10-22) claims 1-7, paragraphs [0016], [0020] | 1-9 |
| A | WO 2013/114849 A1 (DKS CO., LTD.) 08 August 2013 (2013-08-08) claims 1-17, paragraphs [0015], [0023] | 1-9 |
| A | US 2014/0231706 A1 (SAMSUNG SDI CO., LTD.) 21 August 2014 (2014-08-21) entire text | 1-9 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 August 2024** | **13 August 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/018843**

| Patent document cited in search report | | | Publication date (day/month/year) | Patent family member(s) | | Publication date (day/month/year) |
|---|---|---|---|---|---|---|
| JP | 2012-204244 | A | 22 October 2012 | (Family: none) | | |
| WO | 2013/114849 | A1 | 08 August 2013 | US 2015/0017533 A1 claims 1-17, paragraphs [0017], [0022] EP 2811561 A1 CN 104115316 A KR 10-2014-0116910 A TW 201342699 A | | |
| US | 2014/0231706 | A1 | 21 August 2014 | KR 10-2014-0104268 A | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7161078 B